# EUROPEAN PATENT APPLICATION

(11) **EP 1 802 106 A1**
(43) Date of publication of application: **27.06.2007**
(21) Application number: 06125207.8
(22) Date of filing: 01.12.2006
(51) Int. Cl.: H04N 5/262, H04N 9/75, G09G 5/393

(54) **Image processing apparatus and method**

(30) Priority: 22.12.2005 KR 20050128015
(71) Applicant: Samsung Electronics Co., Ltd., Suwon-si 442-742 Gyeonggi-Do (KR)
(72) Inventor: Anton, Komlev, Yeongtong-gu Suwon-si Gyeonggi-do (KR); Chang, Hye-young, Deungchon-2dong Gangseo-gu Seoul (KR)
(74) Representative: Clark, David James

(57) **Abstract**

An image processing method mixing a first image and a second image each formed with a plurality of pixels, the image processing method comprises: determining whether the plurality of pixels forming the first image are transparent or not; selecting pixels of the second image corresponding to pixels of the first image which is determined to be transparent; color mixing pixels of the first image which is determined not to be transparent and the corresponding pixels of the second image; and creating a final image formed of the selected pixels of the second image and the color mixed pixels. Thus, the present invention provides an image processing apparatus and an image processing method capable of performing a fast mixing process for a plurality of layers.

## Description

The present invention relates to image processing apparatus and methods for processing an image, and more particularly, to image processing apparatus and an image processing methods for performing a fast mixing process for a plurality of layers.

An image processing apparatus such as a television system performs image processing in order to display an image on the basis of information included in a broadcasting signal. The image processing can include a process for processing images with a plurality of layers (hereinafter, referred to as multi-layered images) as a single image.

For example, the image processing is performed to display an image visualizing broadcasting contents (hereinafter, referred to as a "video image"), an image in a form of an on-screen-display (OSD) such as a user control menu (hereinafter, referred to as an "OSD image"), a datacasting/data broadcasting image (e.g., subtitles), on one screen at the same time.

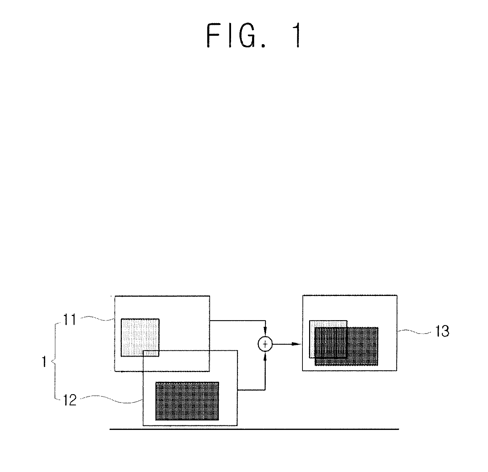

In order to form one image from the multi-layered images, the multi-layered images are mixed. FIG. 1 shows mixing of a plurality of layers according to a conventional image processing method. As shown in FIG. 1, a multi-layered image 1 is formed with two layers 11 and 12, and a final image 13 is formed by mixing the two layers 11 and 12. The final image 13 is directly displayed to a user through a display.

The mixing of the plurality of layers requires a color mixing calculation process. Such a color mixing calculation process, for example, includes decomposition of the corresponding pixels to respective color components, calculation of new color components by using an alpha blending value of each layer, and final pixel color composition from the new color components. This process involves intensive calculation.

A user may notice the final image update process when the layer mixing calculation is not fast enough, and this may cause a serious problem in animation which requires a fast and frequent image update process.

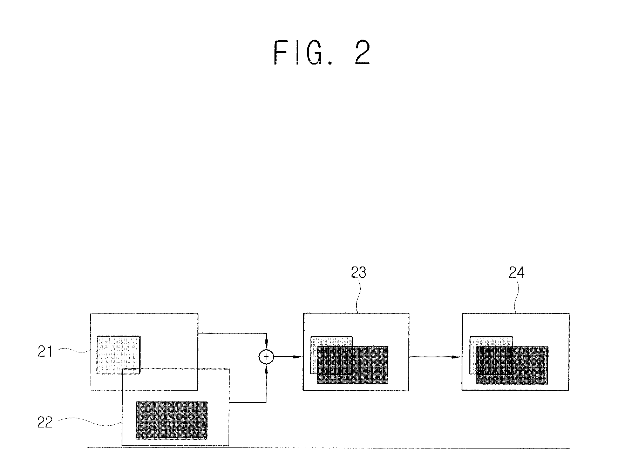

To solve the above-stated problem, a double buffering scheme has been employed. FIG. 2 is a flowchart showing a conventional double buffering process. According to the double buffering scheme, two layers 21 and 22 are mixed into an intermediate image 23 in a given intermediate buffer, and subsequently, the intermediate image 23 is copied to a final image 24 to be displayed on a screen of the display. The image copying speed from the intermediate image 23 to the final image 24 according to the double buffering scheme is faster than the image update speed using the mixing calculation, and accordingly, double buffering has the advantage of preventing the image update process from being noticed by a user.

The double buffering scheme is commonly applied to independently display a plurality of layers containing graphic information such as a motion video, an OSD, subtitles, and a teletext, etc., at the same time. However, a TV system using double buffering will not display variations in a given layer forming a final image in real-time. This problem is particularly relevant to digital television broadcasting, as frequent mixing calculations may be required for digital broadcast data.

It is an aim of preferred embodiments of the present invention to address at least one problem associated with the prior art, whether identified herein or otherwise.

In a first aspect the present invention provides an image processing method mixing a first image and a second image each formed with a plurality of pixels, the image processing method comprising: determining whether the plurality of pixels forming the first image are transparent or not; selecting pixels of the second image corresponding to pixels of the first image which is determined to be transparent; color mixing pixels of the first image which is determined not to be transparent and the corresponding pixels of the second image; and creating a final image formed of the selected pixels of the second image and the color mixed pixels.

Suitably, when determining transparency, transparency of at least one pixel in an area formed of a plurality of pixels is checked and it is determined that all pixels forming the area are transparent when the at least one pixel is determined to be transparent.

Suitably, the area formed of the plurality of pixels comprises a unit area of an image displayed in the form of an on screen display (OSD).

Suitably, the area formed of the plurality of pixels comprises a unit area of an image displayed on the basis of a data broadcasting signal.

Suitably, the image processing method further comprises receiving a digital television (DTV) broadcasting signal that includes information on at least one of the first image and the second image.

Suitably, the image processing method further comprises displaying the final image.

In a second aspect the present invention provides an image processing apparatus mixing a first image and a second image each formed with a plurality of pixels, the image processing apparatus comprising: a transparency determiner for determining whether the plurality of pixels forming the first image are transparent or not; a color mixer for color mixing a plurality of pixels; and a mixing controller for selecting pixels of the second image corresponding to pixels of the first image when the pixels of the first image are determined to be transparent, performing color mixing for the pixels of the first image determined not to be transparent and the corresponding pixels of the second image when the pixels in the first image are determined not to be transparent, and creating a final image formed of the selected pixels of the second image and the color mixed pixels.

Suitably, the transparency determiner checks at least one pixel for each area formed of a plurality of pixels and determines all pixels forming the area to be transparent when the at least one pixel is determined to be transparent.

Suitably, the area formed of the plurality of pixels comprises a unit area of an image displayed in the form of an on screen display (OSD).

Suitably, the area formed of the plurality of pixels comprises a unit area of an image displayed on the basis of a data broadcasting signal.

Suitably, the image processing apparatus further comprises a signal receiver for receiving a digital television (DTV) broadcasting signal that includes information on at least one of the first image and the second image.

Suitably, the image processing apparatus further comprises a display for displaying the final image.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:FIG. 1 shows the mixing of a plurality of layers according to the prior art.
FIG. 2 shows a double buffering process according to the prior art.
FIG. 3 is a block diagram showing the configuration of an image processing apparatus according to an exemplary embodiment of the present invention.
FIG. 4 shows the mixing of a plurality of layers performed by the image processing apparatus in FIG. 3.
FIG. 5 is a block diagram showing an internal configuration of a signal processing apparatus of the image processor in FIG. 3.
FIG. 6 shows a transparency determiner of the image processor of FIG. 3.
FIG. 7 is a flowchart showing an image processing method according to an exemplary embodiment of the present invention.

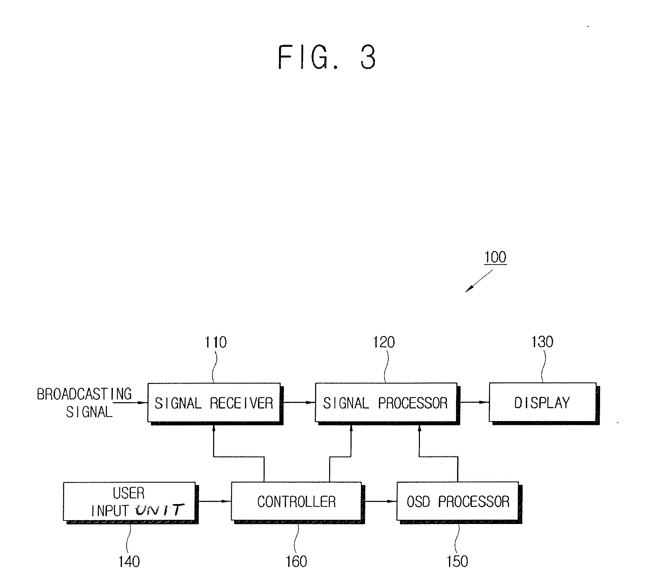

Hereinafter, example embodiments of the present invention will be described in detail with reference to the accompanying drawings. FIG. 3 is a block diagram illustrating a configuration of an image processor 100 according to an embodiment of the present invention. The image processor 100 receives a television broadcasting signal from a broadcasting station and/or a video signal from an external video output apparatus such as a video cassette recorder (VCR), a digital video disk (DVD), a personal computer (PC), etc., performs given image processing on the received signal, and displays an image based on the processed video signal. The image processor 100 may be provided as a television.

As shown in FIG. 3, the image processor 100 may include a signal receiver 110, a signal processor 120, a display 130, a user input unit 140, an on screen display (OSD) processor 150, and a controller 160.

The signal receiver 110 receives a video signal. The signal receiver 110 may include a tuner (not shown) for receiving a broadcasting signal from a broadcasting station. The broadcasting signal may be a video signal for digital television broadcasting according to the present embodiment. The signal receiver 110 may receive a video signal from an external video apparatus (not shown) such as a VCR, a DVD, a PC, etc., and may include a connection terminal (not shown) for connection with the external video apparatus.

The signal processor 120 receives a video signal from the signal receiver 110 and converts the video signal to a signal that can be displayed by the display 130. For example, the signal processor 120 performs decoding of the video signal to extract image information, and scaling for adjusting image resolution in accordance with user settings and characteristics of the display 130. The signal processor 120 obtains an image based on the image information through the decoding process. The signal processor 120 obtains a data image (e.g. subtitles) from a video signal when receiving the video signal from the data broadcast. In addition, the signal processor 120 according to the present embodiment performs image processing to form one image from images of plural layers, that is, a multi-layered image.

The display 130 displays an image processed by the signal processor 120. The display 130 may be provided as a cathode ray tube (CRT), a liquid crystal display (LCD), a plasma display panel (PDP), a digital light processing (DLP) display, an organic light-emitting diode (OLED) display, a surface-conduction electron-emitter display (SED), a field emission display (FED), etc.

The user input unit 140 transmits information corresponding to instructions of the user input to the controller 160. The user input unit 140 may be provided as a remote controller and/or a control panel, etc.

The OSD processor 150 generates an OSD image to be displayed on the display 130 in addition to a video image and/or a data image based on the video signal. The OSD image may include a menu for user settings according to the present embodiment.

The controller 160 controls other components of the image processor 100. The controller 160 controls the display 140 to display the video image, the data image, and/or the OSD image according to user's selection.

Hereinafter, the signal processor 120 according to the present embodiment will be described in more detail. The signal processor 120 performs color mixing for a plurality of layers in accordance with transparency of the respective layers. When the plurality of layers includes a certain layer which does not have any image to display, that is, when the certain layer includes a fully transparent image, the layer is excluded from the mixing calculation to reduce complexity in the final image calculation, thereby achieving fast image processing.

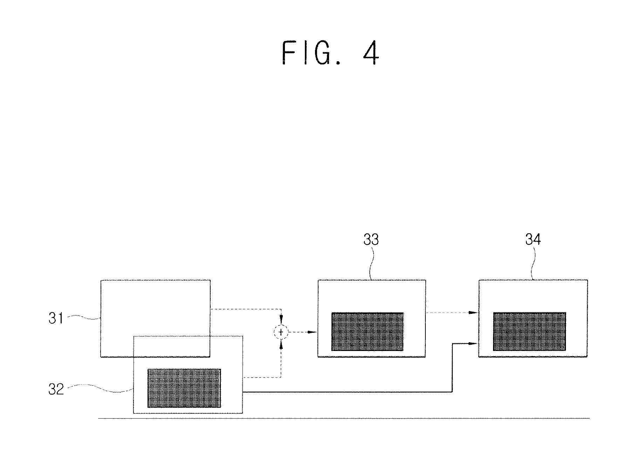

For example, as shown in FIG. 4, when there are two images 31 and 32 (respectively referred to as a "first image" and a "second image") and the first image 31 is fully transparent, the signal processor 120 does not perform color mixing for the first and second images 31 and 32 in the intermediate buffer 33 and directly outputs the second image 32 as a final image 34. The first and second images may be one of a video image, a data image, and an OSD image, respectively, according to the present embodiment.

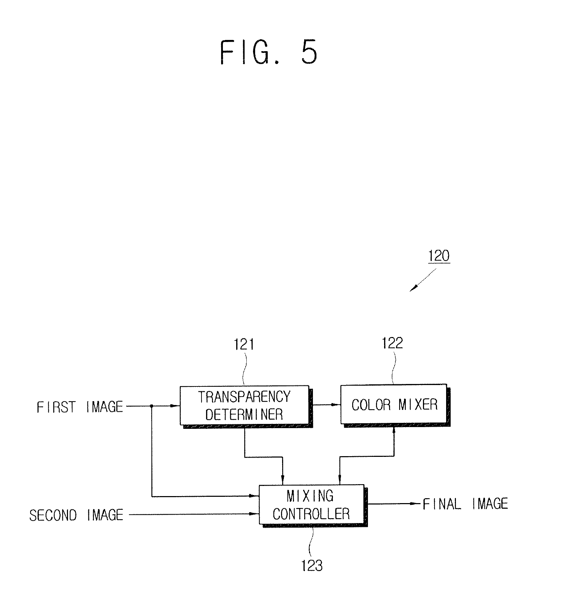

FIG. 5 is a block diagram illustrating an internal configuration of the signal processor 120 according to the embodiment of the present invention. The signal processor 120 includes a transparency determiner 121, a color mixer 122, and a mixing controller 123.

The transparency determiner 121 determines whether a plurality of pixels forming the first image are transparent or not. According to the embodiment of the present invention, transparency may be represented by 4-bit data respectively allocated to the respective pixels of the first image when using a 16-bit color format. In this instance, the transparency determiner 121 may determine a pixel having a data value of "0(0000)" as a fully transparent pixel and a pixel having a data value of "15(1111)" as a fully opaque pixel. The transparency determiner 121 transmits transparency information on the first image to the mixing controller 123.

Meanwhile, the transparency determiner 121 checks one pixel of each area formed of more than two pixels, and may determine that all pixels of the concerned area are transparent when the checked pixel is transparent.

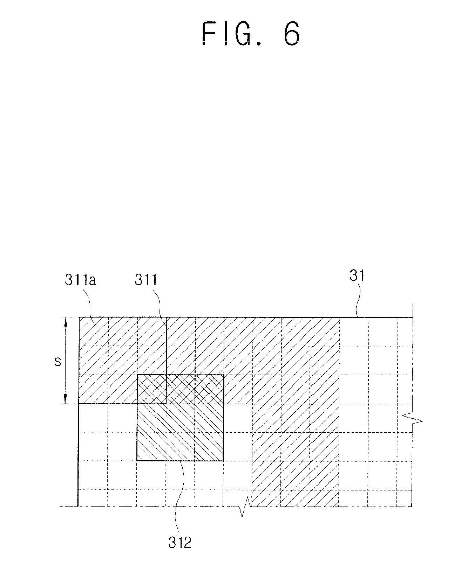

FIG. 6 illustrates the transparent determiner 121 according to the embodiment of the present invention. The reference number 31 in FIG. 6 represents the first image, and areas divided by dotted lines in the first image 31 represent pixels. Pixels filled with oblique lines in the first image 31, for example, represent a unit area for the OSD image or data image. All pixels in such a unit area have uniform transparency. The unit area according to the embodiment of the present invention, for example, equals a 32*32 pixel for the OSD image, or a 4*4 pixel for the data image.

The transparency determiner 121 can determine transparency by checking one pixel in every area having a size S, which has the same size as the unit area of the image. For example, when the size of the unit area of the image is 3*3, the transparency determiner 121 checks one pixel 311a among the nine pixels included in a square area 311 having the size S of three pixels. The transparency determiner 121 subsequently checks transparency of every unit of area having the size of 3*3 pixels to check overall transparency of the first image 31.

Therefore, according to the embodiment of the present invention, a faster layer mixing calculation can be achieved by reducing the time for determining transparency.

The color mixer 122 performs color mixing for the first image 31 and the second image 32. The color mixer 122, for example, decomposes pixels into respective color components, performs a new color component calculation using an alpha blending value of each layer, and composes a final pixel color using the newly calculated color component.

The mixing controller 123 controls the color mixer 122 to perform color mixing for opaque pixels in the first image 31 and the corresponding pixels in the second image 32. In addition, the mixing controller 123 creates a final image 34 composed of pixels in the second image 32, which correspond to transparent pixels in the first image 31, and pixels color mixed by the color mixer 122.

The transparency determiner 121, the color mixer 122, and the mixing controller 123 according to the embodiment of the present invention may be provided as a computer program having functions of the respective elements as described above. In this case, the image processor 100 may further include a microprocessor (not shown) such as a central processing unit (CPU) for executing the computer program and a memory (not shown) such as a read only memory (ROM) and a random access memory (RAM) for storing and loading the computer program.

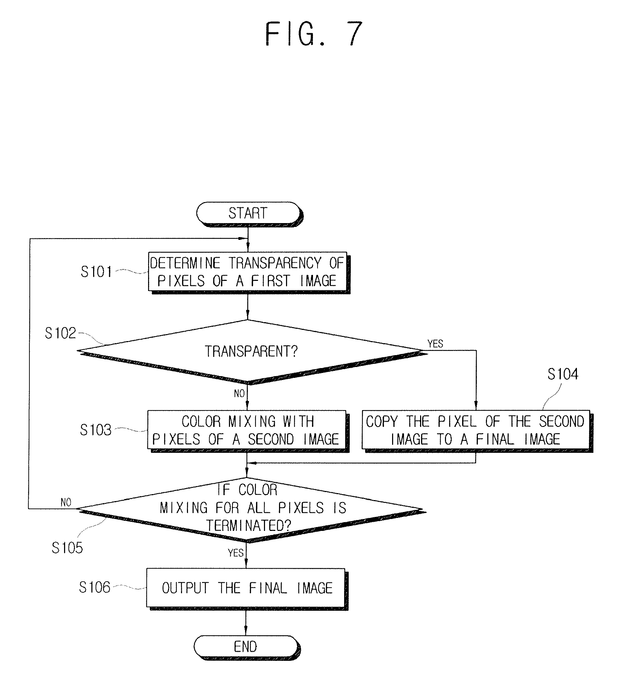

FIG. 7 is a flowchart showing a method for processing an image according to the embodiment of the present invention. First, among the first and second images 31 and 32 which are expected to be mixed, the transparency of pixels in the first image 31 is determined (S101). If the pixels are determined not to be transparent (S102), the pixels in the first image 21, which are determined not to be transparent, and the corresponding pixels in the second image 32 are color mixed (S103).

If the pixels in the first image 31 are determined to be transparent (S102), color mixing is not performed and the corresponding pixels in the second image 32 are copied to the final image 34 to be outputted (S104). Subsequently, termination (completion) of the color mixing for all the pixels is checked, and if color mixing is not terminated, the transparency determination of S101 is continued (S105). When the color mixing for all pixels is determined to be terminated (completed) (S105), the final image 34 is outputted (S106).

Through S101 to S105, the transparency determination may be performed for each pixel, or it may be performed on the basis of one pixel per each area formed of more than two pixels.

As described above, the present invention is described in detail in an exemplary embodiment, but it is not restricted to this embodiment, and various modifications can be made within the scope of the appended claims.

For example, the color mixing process can be performed for three or more images. That is, when performing the color mixing process for first, second, and third images, a fourth image can be generated by color mixing the first, second, and third images according to the embodiment of the present invention and the third and fourth images are color mixed according to the embodiment of the present invention.

In addition, when performing the color mixing process for the first, second, and third images, transparency of more than one image among the first, second, and third images may be determined according to the embodiment of the present invention such that an image which has been determined to be transparent can be excluded from the mixing calculation.

As described above, according to the present invention, an image processing apparatus and an image processing method of performing a fast mixing process for a plurality of layers can be provided.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing method for mixing a first image and a second image each formed with a plurality of pixels, the image processing method comprising:
determining whether the plurality of pixels forming the first image are transparent or not (S101, S102);
selecting pixels of the second image corresponding to pixels of the first image which is determined to be transparent (S104);
color mixing pixels of the first image which is determined not to be transparent and the corresponding pixels of the second image (S103); and
creating a final image formed of the selected pixels of the second image and the color mixed pixels (S106).

2. The image processing method of claim 1, wherein when determining transparency, transparency of at least one pixel in an area formed of a plurality of pixels is checked and it is determined that all pixels forming the area are transparent when the at least one pixel is determined to be transparent.

3. The image processing method of claim 1 or 2, wherein the area formed of the plurality of pixels comprises a unit area of an image displayed in the form of an on screen display (OSD).

4. The image processing method of claim 1, 2 or 3, wherein the area formed of the plurality of pixels comprises a unit area of an image displayed on the basis of a data broadcasting signal.

5. The image processing method of any preceding claim, further comprising receiving a digital television (DTV) broadcasting signal that includes information on at least one of the first image and the second image.

6. The image processing method of any preceding claim, further comprising displaying the final image.

7. An image processing apparatus for mixing a first image and a second image each formed with a plurality of pixels, the image processing apparatus comprising:
a transparency determiner (121) for determining whether the plurality of pixels forming the first image are transparent or not;
a color mixer (122) for color mixing a plurality of pixels, and
a mixing controller (123) for selecting pixels of the second image corresponding to pixels of the first image when the pixels of the first image are determined to be transparent, performing color mixing for the pixels of the first image determined not to be transparent and the corresponding pixels of the second image when the pixels in the first image are determined not to be transparent, and creating a final image formed of the selected pixels of the second image and the color mixed pixels.

8. The image processing apparatus of claim 7, wherein the transparency determiner (121) checks at least one pixel for each area formed of a plurality of pixels and determines all pixels forming the area to be transparent when the at least one pixel is determined to be transparent.

9. The image processing apparatus of claim 7 or 8, wherein the area formed of the plurality of pixels comprises a unit area of an image displayed in the form of an on screen display (OSD).

10. The image processing apparatus of claim 7, 8 or 9, wherein the area formed of the plurality of pixels comprises a unit area of an image displayed on the basis of a data broadcasting signal.

11. The image processing apparatus of any one of claims 7-10, further comprising a signal receiver (110) for receiving a digital television (DTV) broadcasting signal that includes information on at least one of the first image and the second image.

12. The image processing apparatus of any one of claims 7-11, further comprising a display (130) for displaying the final image.
